Europäisches Patentamt

European Patent Office

Office européen des brevets

(11) Veröffentlichungsnummer: **0 210 947 B1**

(12) **EUROPÄISCHE PATENTSCHRIFT**

(45) Veröffentlichungstag der Patentschrift: **25.09.91**

(51) Int. Cl.5: **G01M 3/26**, F17D 3/10, G01M 3/20, G01M 3/02

(21) Anmeldenummer: **86730121.0**

(22) Anmeldetag: **28.07.86**

(54) Vorrichtung zum Feststellen des Vorhandenseins eines Gases.

(30) Priorität: **30.07.85 DE 3527689**

(43) Veröffentlichungstag der Anmeldung:
**04.02.87 Patentblatt 87/06**

(45) Bekanntmachung des Hinweises auf die Patenterteilung:
**25.09.91 Patentblatt 91/39**

(84) Benannte Vertragsstaaten:
**AT CH FR GB IT LI NL SE**

(56) Entgegenhaltungen:
**DE-A- 3 214 743**
**DE-B- 2 731 361**
**FR-A- 2 347 668**

(73) Patentinhaber: **BEUTLER MASCHINENBAU-UND VERTRIEBSGESELLSCHAFT INHABER WOLFGANG BEUTLER**
**Schleswagweg 2**
**W-2440 Göhl(DE)**

(72) Erfinder: **Beutler, Wolfgang**
**Welterpfad 53**
**W-1000 Berlin 48(DE)**

(74) Vertreter: **Jander, Dieter, Dipl.-Ing. et al**
**Dipl.-Ing. Dieter Jander Dr.-Ing. Manfred Böning Patentanwälte Leistikowstrasse 2**
**W-1000 Berlin 19(DE)**

Rank Xerox (UK) Business Services

## Beschreibung

Die Erfindung bezieht sich auf eine Vorrichtung zum Feststellen des Vorhandenseins eines Gases in einer Flüssigkeit, die durch eine Leitung strömt, bestehend aus einem Raum in der Leitung, in dem sich das Gas oben sammeln kann und aus dem es durch eine Öffnung zu einem Fühlglied eines Gasanzeigegerätes gelangen kann.

Eine derartige Vorrichtung ist z.B. aus FR-A-2 347 668 bekannt.

Solche Vorrichtungen kommen auch in Kühlanlagen zur Anwendung. Das Gas ist dann ein Kältemittel, z.B. Freon, und die Flüssigkeit Wasser. Normalerweise sind die Kreisläufe der beiden Medien voneinander getrennt. Aufgrund eines Lecks kann es aber passieren, daß das Gas in die Flüssigkeit gelangt. Das muß dann zur Anzeige gebracht werden.

Bei bekannten Vorrichtungen dieser Art ist die Öffnung ständig offen. Mittels einer Pumpe wird in Zeitabständen von einigen Minuten etwa vorhandenes Gas abgesaugt. Der Nachteil dieser Vorrichtung besteht darin, daß u.U. Flüssigkeit mit angesaugt wird. Außerdem wird in der Regel nicht sofort das Vorhandensein von Gas angezeigt, vielmehr nur dann, wenn die Pumpe arbeitet. Weiterhin ist die Anlage energiemäßig ungünstig und gerätemäßig sehr aufwendig, letzteres deshalb, weil einerseits eine Pumpe vorhanden sein muß und andererseits der Raum relativ hoch sein muß, damit eine Wassersäule gebildet wird, die dem Druck in der Leitung die Waage hält, denn oberhalb der Wassersäule herrscht normaler Atmosphärendruck. Schließlich wird ständig Wasserdampf angesaugt, was sich mit der Zeit auf verschiedene Geräteteile ungünstig auswirkt.

Der Erfindung liegt die Aufgabe zugrunde, die eingangs erwähnte Vorrichtung derart auszubilden, daß Flüssigkeit nicht mitgerissen werden kann, daß die Anzeige stets mehr oder weniger sofort anspricht und die Vorrichtung möglichst einfach und robust ausgebildet ist und billig arbeitet.

Diese Aufgabe wird erfindungsgemäß dadurch gelöst, daß die Öffnung durch ein Ventilteil verschließbar ist, das von einem in dem Raum befindlichen, auf bzw. in der Flüssigkeit schwimmenden Schwimmer derart betätigt wird, daß es die Öffnung verschließt, wenn sich in dem Raum kein Gas befindet, und die Öffnung freigibt, wenn sich in dem Raum Gas befindet.

Auf diese Weise wird erreicht, daß die Flüssigkeit nicht aus dem Raum gelangen kann und daß etwa vorhandenes Gas praktisch sofort angezeigt wird. Außerdem ist die Vorrichtung einfacher und robuster ausgebildet als die bekannte und verbraucht zum Absondern des Gases keinerlei Energie. Ein weiterer Vorteil des Anmeldungsgegenstandes besteht darin, daß wesentlich reineres Gas zur Messung gelangt als im bekannten Fall, bei dem das Gas stets stark mit Luft verdünnt ist. Vorteilhaft ist auch, daß der Druck in der Leitung vor der Öffnung nicht abgebaut werden muß.

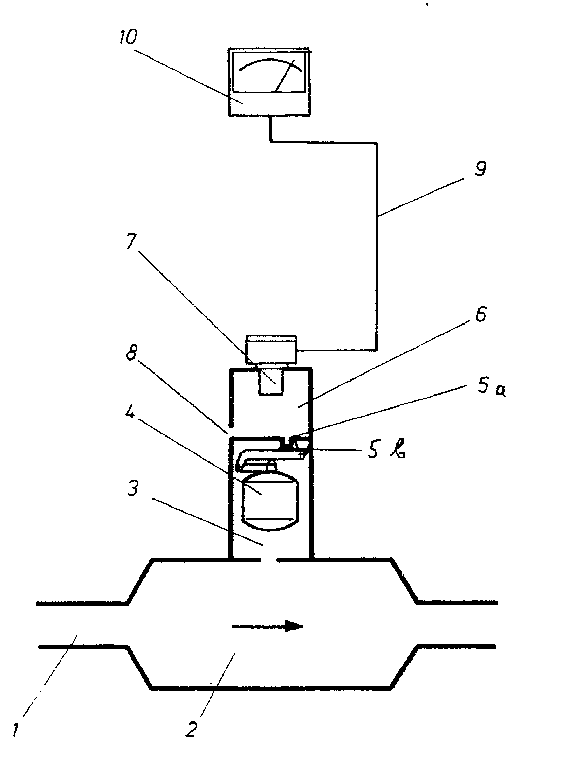

Weitere Einzelheiten der Erfindung ergeben sich aus der einzigen Figur der Zeichnung.

Darin ist mit 1 eine Leitung, mit 2 eine Erweiterung in der Leitung, mit 3 eine Kammer, mit 4 ein in der Kammer 3 befindlicher Schwimmer, mit 5a eine Öffnung in dem oberen Wandteil der die Kammer 3 umgebenden Wand, mit 5b ein Ventilteil, das durch den Schwimmer 4 betätigt wird und die Öffnung 5a verschließt oder freigibt, mit 6 eine weitere Kammer, mit 7 ein Fühlglied, das auf das Vorhandensein eines bestimmten Gases anspricht, mit 8 eine Entgasungsöffnung, mit 9 eine elektrische Leitung und mit 10 ein Anzeigegerät bezeichnet, das das Vorhandensein eines bestimmten Gases anzeigt.

Durch die Leitung 1 und die Erweiterung 2 strömt Wasser. Befindet sich in diesem Freon, so sammelt sich dieses oben in der Erweiterung 2, strömt durch eine Öffnung in die Kammer 3 und sammelt sich oben in dieser. Der Schwimmer 4 sackt ab einer bestimmten Gasmenge nach unten, so daß das Ventilteil 5b die Öffnung 5a freigibt. Das oben in der Kammer 3 befindliche Gas strömt nunmehr durch die Öffnung 5a in die Kammer 6 und wird mittels des Gerätes 10 angezeigt.

Das Volumen der Kammer 3 ist klein (z.B. relativ zu dem Volumen der Erweiterung 2), so daß entsprechend kleine Gasmengen erfaßbar sind.

## Patentansprüche

1. Vorrichtung zum Feststellen des Vorhandenseins eines Gases in einer Flüssigkeit, die durch eine Leitung (1) strömt, bestehend aus einem Raum (2,3) in der Leitung (1), in dem sich das Gas oben sammeln kann und aus dem es durch eine Öffnung (5a) zu einem Fühlglied (7) eines Gasanzeigegerätes (10) gelangen kann, dadurch gekennzeichnet, daß die Öffnung (5a) durch ein Ventilteil (5b) verschließbar ist, das von einem in dem Raum (2,3) befindlichen, auf bzw. in der Flüssigkeit schwimmenden Schwimmer (4) derart betätigt wird, daß es die Öffnung (5a) verschließt, wenn sich in dem Raum (2,3) kein Gas befindet, und die Öffnung freigibt, wenn sich in dem Raum (2,3) Gas befindet.

2. Vorrichtung nach Anspruch 1, dadurch gekennzeichnet, daß sich in Gasströmungsrichtung hinter der Öffnung (5a) eine erste Kammer (6) befindet, in der das Fühlglied (7) untergebracht ist.

3. Vorrichtung nach Anspruch 2, dadurch gekennzeichnet, daß sich die erste Kammer (6) unmittelbar über dem Raum (2,3) befindet.

4. Vorrichtung nach Anspruch 2 oder 3, dadurch gekennzeichnet, daß die erste Kammer (6) eine Entgasungsöffnung (8) oder mehrere aufweist, über die das Gas nach einer für die Messung erforderlichen Verweilzeit entweicht, wobei vorzugsweise die Entgasungsöffnung (8) so angeordnet ist, daß Gas, das schwerer als Luft ist, entweichen kann.

5. Vorrichtung nach einem der Ansprüche 1 bis 4, dadurch gekennzeichnet, daß der Schwimmer (4) und/oder das Ventilteil (5b) so ausgebildet sind, daß die Öffnung (5a) verzögert öffnet, d.h. wenn sich eine gewisse Gasmenge angesammelt hat, bzw. verzögert wieder schließt, d.h. wenn eine gewisse Gasmenge ausgeströmt ist.

6. Vorrichtung nach einem der Ansprüche 1 bis 5, dadurch gekennzeichnet, daß der Raum (2,3) durch eine Erweiterung (2) in der Leitung (1), in der sich die Strömungsgeschwindigkeit derart verlangsamt, daß sich die Gasblasen absondern können, und eine zweite Kammer (3) oberhalb der Erweiterung (2) gebildet wird, die über eine Öffnung mit der Erweiterung (2) verbunden ist und in der sich der Schwimmer (4) und das Ventilteil (5b) befinden.

7. Vorrichtung nach Anspruch 6, dadurch gekennzeichnet, daß das Volumen der Erweiterung (2) groß gegenüber dem Volumen der zweiten Kammer (3) ist.

**Claims**

1. Device for detecting the presence of a gas in a liquid which flows through a line (1), consisting of a space (2, 3) in the line (1), wherein the gas can collect at the top and from where it can pass through an orifice (5a) to a sensing member (7) of the gas indicator instrument (10), characterised in that the orifice (5a) can be closed by a valve part (5b) which is actuated by a float (4) located in the space (2, 3) and floating on or in the liquid, in such a way that it closes the orifice (5a) when there is no gas in the space (2, 3) and clears the orifice when there is gas in the space (2, 3).

2. Device according to Claim 1, characterised in that a first chamber (6), in which the sensing member (7) is accommodated, is located downstream of the orifice (5a) in the direction of gas flow.

3. Device according to Claim 2, characterised in that the first chamber (6) is located directly above the space (2, 3).

4. Device according to Claim 2 or 3, characterised in that the first chamber (6) has one or more vent orifices (8), through which the gas escapes after a residence time required for the measurement, the vent orifice (8) being preferably arranged in such a way that gas heavier than air can escape.

5. Device according to one of Claims 1 to 4, characterised in that the float (4) and/or the valve part (5b) are designed in such a way that the orifice (5a) opens with a delay, i.e. when a certain quantity of gas has collected, and closes again with a delay, i.e. when a certain quantity of gas has flowed out.

6. Device according to one of Claims 1 to 5, characterised in that the space (2, 3) is formed by a widening (2) in the line (1), wherein the flow velocity slows down to such an extent that the gas bubbles can separate out, and by a second chamber (3) above the widening (2), which second chamber is connected via an orifice to the widening (2) and in which the float (4) and the valve part (5b) are located.

7. Device according to Claim 6, characterised in that the volume of the widening (2) is large as compared with the volume of the second chamber (3).

**Revendications**

1. Dispositif pour établir la présence d'un gaz dans un liquide circulant dans une conduite (1), constitué d'un espace (2,3) se trouvant dans la conduite (1), dans laquelle le gaz peut se rassembler dons la partie supérieure et à partir de laquelle le gaz peut parvenir à un élément sensible (7) d'un appareil (10) indicateur de gaz par l'intermédiaire d'une ouverture (5a), caractérisé en ce que l'ouverture (5a) peut être fermée par un élément de soupape (5b) actionné par un flotteur (4) se trouvant dans l'espace (2,3) et flottant sur ou dans le liquide de telle manière que ledit élément de soupape (5b) ferme l'ouverture (5a) lorsqu'il ne se trouve pas de gaz dans l'espace (2,3) et libère l'ouverture lorsqu'il se trouve du gaz dans l'espace (2,3).

2. Dispositif selon la revendication 1, caractérisé en ce qu'une première chambre (6), dans laquelle est disposé l'élément sensible (7), se trouve derrière l'ouverture (5a) par rapport à la direction du flux de gaz.

3. Dispositif selon la revendication 2, caractérisé en ce que la première chambre (6) se trouve directement au-dessus de l'espace (2,3).

4. Dispositif selon la revendication 2 ou 3, caractérisé en ce que la première chambre (6) présente une ou plusieurs ouvertures (S) de dégazage par l'intermédiaire de la ou desquelles le gaz s'échappe après un temps de présence nécessaire pour la mesure, l'ouverture de dégazage (8) étant de préférence disposée de telle manière que du gaz qui est plus lourd que l'air puisse s'échapper.

5. Dispositif selon l'une des revendications 1 à 4, caractérisé en ce que le flotteur (4) et/ou l'élément de soupape (5b) sont conformés de telle manière que l'ouverture (5a) s'ouvre avec retard, lorsqu'une certaine quantité de gaz s'est rassemblée, ou se referme avec un retard, lorsqu'une certaine quantité de gaz a été évacuée.

6. Dispositif selon l'une des revendications 1 à 5, caractérisé en ce que l'espace (2,3) est constitué par un élargissement (2) de la conduite (1) dans lequel la vitesse d'écoulement se ralentit de telle manière que les bulles de gaz peuvent se séparer, et par une deuxième chambre (3) disposée au-dessus de l'élargissement (2), qui est reliée par une ouverture avec l'élargissement (2) et dans laquelle se trouvent le flotteur (4) et l'élément de soupape (5b).

7. Dispositif selon la revendication 6, caractérisé en ce que le volume de l'élargissement (2) est important par rapport au volume de la deuxième chambre (3).

EP 0 210 947 B1

5